Europäisches Patentamt

European Patent Office

Office européen des brevets

(11) Veröffentlichungsnummer: **0 371 326**
**A2**

# EUROPÄISCHE PATENTANMELDUNG

(21) Anmeldenummer: 89121163.3

(51) Int. Cl.⁵: **G01S 17/06**

(22) Anmeldetag: **16.11.89**

(30) Priorität: **30.11.88 DE 3840277**

(43) Veröffentlichungstag der Anmeldung:
**06.06.90 Patentblatt 90/23**

(84) Benannte Vertragsstaaten:
**DE FR GB NL**

(71) Anmelder: **DIEHL GMBH & CO.**
**Stephanstrasse 49**
**D-8500 Nürnberg(DE)**

(72) Erfinder: **Schottelius, Horst-Ulf**
**Friedrich-Wittmann-Strasse 2**
**D-8505 Röthenbach(DE)**

(54) **Einrichtung zur Detektion von sich bewegenden, mit Motoren ausgestatteten Fahrzeugen.**

(57) Mit der Einrichtung sollen sich Aggregate, insbesondere Fahrzeuge, in einem Gefechtsfeld aufgrund einer von ihnen ausgehenden Gasentwicklung orten lassen. Es ein motorisch angetriebener Drehspiegel-(4) vorgesehen, der einen vertikalen Laserstrahl(3) so umlenkt, daß dieser in einer horizontalen Ebene kreist. Der Drehspiegel(4) reflektiert von einer Gaswolke zurückgestrahlte Streulichtanteile(7) des Laserstrahls(3) auf eine Empfangsoptik(5), die diese auf einen Detektor(8) fokusiert. Der Detektor(8) ist an eine Auswerteschaltung(12) angeschlossen, die ein Signal abgibt, wenn während einer Umdrehung des Laserstrahls(3) in der horizontalen Ebene in einem Teilwinkelbereich aufgrund der Gaswolke(13) ein stärkerer Streulichtanteil(7) auftritt als im übrigen.

EP 0 371 326 A2

## Einrichtung zur Detektion von sich bewegenden, mit Motoren ausgestatteten Fahrzeugen

Die Erfindung betrifft eine Einrichtung gemäß dem Oberbegriff des Anspruches 1. Eine derartige Einrichtung ist aus der DE-OS 35 43 792 zur Aufnahme aus Auswertung tiefstfrequenter Signalanteile bekannt, die durch den Untergrund als Körperschallsignale übertragen und vom sich bewegenden Fahrzeug (insbesondere Landfahrzeug oder Hubschrauber) infolge Schwingungsabstrahlung in den Boden hervorgerufen werden. Nachteilig bei einer derartigen Einrichtung ist, daß zur Fernüberwachung eines potentiellen Gefechtsfeldes vor dessen Besitzergreifung durch gegnerische Verbände eine relativ komplizierte Signalverarbeitungsvorrichtung in guter Körperschallkopplung am Boden installiert und gegen gezielte gegnerische Abwehrmaßnahmen getarnt werden muß, was erhebliche Bemühungen und Gefährdungen der eigenen Pioniertruppen bedingt. Andererseits die von in Betrieb befindlichen Fahrzeugmotoren ausgehende Abwärme aus größerer Entfernung (passiv) zu orten, verlangt eine direkte (Sicht-)Verbindung zum Fahrzeug und gefährdet damit wieder die eigenen Aufklärer.

In Erkenntnis dieser Gegebenheiten liegt der Erfindung die Aufgabe zugrunde, eine Einrichtung gattungsgemäßer Art derart auszugestalten, daß sich, bei geringerer Gefährdung der eigenen Aufklärer aus größerer Entfernung und flexibler in bezug auf räumliche Verlegungen des gegnerischen Aufmarschgeländes, eine erhöhte Geschäftigkeit gegnerischer motorisierter Verbände leichter feststellen läßt. Diese Aufgabe ist erfindungsgemäß dadurch gelöst, daß die gattungsgemäße Einrichtung gemäß dem Kennzeichnungsteil des Anspruches 1 ausgelegt ist. Denn in Bewegung befindliche Verbände rufen räumlich konzentriert eine erhöhte Abgas-Konzentration über dem Gelände hervor, die leicht im Rückstrahl-Ortungsverfahren aus (gegenüber dem Gegner) verdeckter Position vor dem relativ homogenen Luftraum-Hintergrund lokalisierbar ist.

Die Ortungseinrichtung macht sich zunutze, daß interessierende Gase, insbesondere Abgase eines Verbrennungsmotors, einen Laserstrahl stärker streuen bzw. reflektieren, als die Luft. Mit der Einrichtung können Fahrzeuge allein aufgrund ihrer Abgasentwicklung lokalisiert werden, ohne daß sie direkt sichtbar sein müssen, oder ihre Wärmestrahlung erfaßt werden muß.

Die Kalibrierung der Einrichtung ist einfach dadurch möglich, daß vor dem Einsatz der Einrichtung die Absorptions- bzw. Streukoeffizienten des jeweiligen Abgases gemessen werden und die Auswerteschaltung entsprechend vorprogrammiert wird.

Die Einrichtung ist auch zur Erkennung von Wolken von gasförmigen Kampfstoffen geeignet. Die Einrichtung wird dann entsprechend der Absorptions- bzw. Streukoeffizienten dieser Gase kalibriert.

Die Auspuffabgase eines Verbrennungsmotors haben eine gewisse Ausströmgeschwindigkeit. Dadurch ergibt sich ein Dopplereffekt für den Laserstrahl bzw. dessen Reflexion. Dies kann in der Auswerteschaltung ausgenutzt werden.

Am Abgasauspuff sind die Abgase durch den Verbrennungsmotor in charakteristischer Weise moduliert. Auch dies kann bei entsprechender Speicherung der Charakteristik in der Auswerteschaltung zur Unterscheidung von Fahrzeugen ausgewertet werden.

In bevorzugter Ausgestaltung der Erfindung läßt die Empfangsoptik in ihrem Zentrum den vertikalen Laserstrahl durch. Die steht gegenüber dem Drehspiegel fest und weist einen kleinen Neigungswinkel zur Horizontalen auf, so daß der fokusierte Streulichtanteil mit der Drehung des Drehspiegels um den vertikalen Laserstrahl kreist. Der Detektor ist kreisringförmig um den vertikalen Laserstrahl angeordnet. Dadurch ist ein einfacher Aufbau der Einrichtung erreicht. Die empfangenen Streulichtanteile sind durch den gesendeten Laserstrahl ungestört.

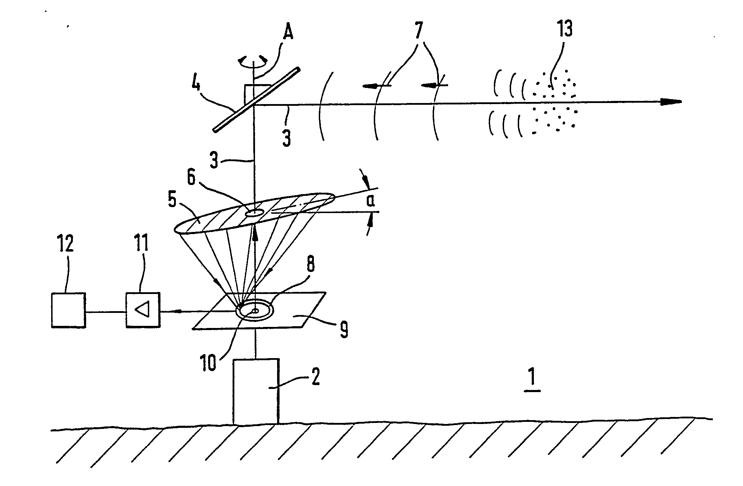

Weitere vorteilhafte Ausgestaltungen der Einrichtung ergeben sich aus den Unteransprüchen und der folgenden Beschreibung eines Ausführungsbeispiels. Die Figur zeigt eine Einrichtung zum Orten einer Gaskonzentration schematisch.

Die Einrichtung ist auf einem Gefechtsfeld(1) aufgestellt. Sie weist einen Laser(2) auf, welcher einen vertikal gerichteten Laserstrahl(3) abstrahlt. Dieser trifft auf einen Drehspiegel(4), welcher um die vertikale Achse(A) rotiert. Die Spiegelfläche des Drehspiegels(4) steht in einem Winkel von 45° zur vertikalen Achse(A). Er lenkt damit den Laserstrahl(3) in die Horizontale um, so daß dieser in einer horizontalen Ebene kreist. Diese Ebene liegt 1m bis 10m über dem Boden des Gefechtsfeldes(1).

Zwischen dem Drehspiegel(4) und dem Laser(2) ist als Empfangsoptik eine Sammellinse (5) angeordnet. Diese steht gegenüber dem Drehspiegel (4) still. Sie weist einen Neigungswinkel(a) zur Horizontalen auf, der kleiner als 5° ist. Das Zentrum(6) der Sammellinse(5) ist für den Laserstrahl(3) durchlässig. Die Sammellinse(5) kann hierfür in ihrem Zentrum(6) mit einer Bohrung versehen sein, in die eine Anpassungsoptik für den Laserstrahl(3) eingesetzt sein kann.

Die Sammellinse(5) ist so angeordnet, daß sie auf den Drehspiegel(4) zurückgestreute Streulichtanteile(7) des Laserstrahls(3), die von diesem auf sie reflektiert sind, auf einen Detektor(8) fokusiert, der auf einer Plattform(9) festliegt. Die Plattform (9) ist zwischen der Sammellinse(5) und dem Laser(2) angeordnet.

Die Plattform(9) weist eine Durchbrechung(10) auf, durch die der Laserstrahl(3) hindurchtritt. Der Detektor(8) ist kreisringförmig gestaltet und umschließt die Durchbrechung(10), die in seinem Zentrum liegt.

Der Detektor(8) kann in mehrere einzelne Sektoren aufgeteilt sein. Er ist über einen Verstärker(11) an eine Auswerteschaltung(12) angeschlossen.

Die Funktionsweise der beschriebenen Einrichtung ist im wesentlichen folgende:
Solange der in der horizontalen Ebene kreisende Laserstrahl(3) auf keine besonderen Gaskonzentrationen trifft, werden keine wesentlichen, auf den Laserstrahl(3) zurückzuführenden Streulichtanteile auf den Drehspiegel(4) reflektiert, so daß der Detektor(8) nicht anspricht.

Tritt im Laserstrahl(3) in einen Teilwinkelbereich seiner Umdrehung eine Gaswolke(13) auf, dann wird an dieser ein Streulichtanteil(7) des Laserstrahls(3) auf den Drehspiegel(4) zurückreflektiert. Dieser reflektierte Streulichtanteil(7) trifft auf die Sammellinse(5), welche den Streulichtanteil(7) auf den Detektor(8) fokusiert. Dieser Streulichtanteil(7) trifft dabei auf denjenigen Detektor-Sektor, der der Drehwinkelstellung des Drehspiegels(4) entspricht, in der die Gaswolke(13) liegt. Die Auswerteschaltung(12) erhält über den Detektor(8) somit die Information, daß zum einen eine den Laserstrahl(3) brechende Gaswolke(13) vorliegt und zum anderen, daß die Gaswolke(13) in einem bestimmten Teilwinkelbereich der umdrehung des Drehspiegels(4) liegt. Die Gaswolke(13) ist damit nach Vorhandensein und ihrere Winkellage in der horizontalen Ebene über dem Boden des Gefechtsfeldes(1) erfaßt. Die Auswerteschaltung(12) gibt dann ein entsprechendes Signal ab.

Die Auswerteschaltung(12) kann zusätzlich auch so ausgelegt sein, daß sie einen durch eine Bewegung der Gaswolke(13) entstehenden Dopplereffekt auswertet und/oder der Gaswolke(13) aufgeprägte Modulationen und/oder spezifische Reflexionseigenschaften der Gaswolke (13) auswertet.

## Ansprüche

1. Einrichtung zur Detektion von sich bewegenden, mit Motoren ausgestatteten Fahrzeugen,
dadurch gekennzeichnet,
daß sie als Rückstrahl-Ortungseinrichtung für erhöhte Abgaskonzentrationen oberhalb des überwachten Geländes ausgelegt ist.
2. Einrichtung nach Anspruch 1,

dadurch gekennzeichnet,
daß sie zur Abstrahlung eines Schwenk-Strahles (3) ausgelegt und mit einer Empfangsoptik (5) für von der Atmosphäre reflektierte Streulichtanteile (7) ausgestattet ist, deren Detektor-Auswerteschaltung (12) ein Signal liefert, wenn in einem Teilwinkelbereich des abgetasteten Atmosphären-Bereiches ein signifikant stärkerer Streulichtanteil (7) auftritt, als in einem benachbarten Teilwinkelbereich.

3. Einrichtung nach Anspruch 1 oder 2,
dadurch gekennzeichnet,
daß sie mit einer Empfangsoptik (5) mit einem zentralen Durchlaßbereich für einen vertikalen Laserstrahl (3) ausgestattet und um einen kleinen Elevationswinkel (a) angestellt ist, und daß empfangene und mittels eines Drehspiegels (4) fokussierte Streulichtanteile (7) um den vertikalen Strahl (3) kreisen, um dem ein Detektor (8) kreisringförmig angeordnet ist.

4. Einrichtung nach Anspruch 2 oder 3,
dadurch gekennzeichnet,
daß der Detektor(8) in Sektoren aufgeteilt ist.

5. Einrichtung nach einem der vorhergehenden Ansprüche,
dadurch gekennzeichnet,
daß der Drehspiegel(4) in einer Höhe zwischen 1 m und 10 m über dem Grund des Gefechtsfeldes(1) dreht.

6. Einrichtung nach einem der vorhergehenden Ansprüche,
dadurch gekennzeichnet,
daß die Empfangsoptik(5) zwischen dem Laser(2) und dem Drehspiegel(4) angeordnet ist und von einer Sammellinse(5) gebildet ist.

7. Einrichtung nach einem der vorhergehenden Ansprüche,
dadurch gekennzeichnet,
daß der Detektor(8) auf einer Plattform(9) angeordnet ist, welche zwischen der Empfangsoptik(5) und dem Laser(2) liegt und eine Durchbrechung(19) für den Laserstrahl(3) aufweist.